**Europäisches Patentamt**

**European Patent Office**

**Office européen des brevets**

(19)

(11) Veröffentlichungsnummer: **0 242 774 B1**

(12) EUROPÄISCHE PATENTSCHRIFT

(45) Veröffentlichungstag der Patentschrift: 05.09.90

(51) Int. Cl.⁵: **G06K 11/06**

(21) Anmeldenummer: **87105497.9**

(22) Anmeldetag: **14.04.87**

(54) **Anordnung zum Verschieben von Zeichen auf dem Bildschirm eines Sichtgerätes.**

(30) Priorität: **16.04.86 DE 3612850**

(43) Veröffentlichungstag der Anmeldung:
**28.10.87 Patentblatt 87/44**

(45) Bekanntmachung des Hinweises auf die Patenterteilung:
**05.09.90 Patentblatt 90/36**

(84) Benannte Vertragsstaaten:
**AT CH DE FR GB IT LI SE**

(56) Entgegenhaltungen:
**EP-A- 0 120 683**
**EP-A- 0 123 043**
**EP-A- 0 150 904**
**DE-A- 3 204 428**
**FR-A- 2 549 991**
**GB-A- 2 133 957**
**US-A- 4 371 813**
**US-A- 4 493 992**

**IBM TECHNICAL DISCLOSURE BULLETIN, Band 27, Nr. 8, Januar 1985, Seiten 4884-4885, New York, US; Y. DOHHAKN: "Mouse adapter"**

(73) Patentinhaber: **Siemens Aktiengesellschaft, Wittelsbacherplatz 2, D-8000 München 2(DE)**

(72) Erfinder: **Kretzschmar, Bernd, Dipl.-Ing. (FH), Im Kirchspitzen 19, D-7552 Durmersheim(DE)**

ACTORUM AG

## Beschreibung

Die Erfindung betrifft eine Anordnung zum Verschieben von Zeichen auf dem Bildschirm eines Sichtgerätes gemäß dem Oberbegriff des Anspruchs 1. Häufig sollen mit Sichtgeräten Übersichtsbilder von Anlagen, z. B. der Energieerzeugung oder -verteilung, wiedergegeben werden. Eine gleichzeitige detaillierte Darstellung der gesamten Anlage mit den Anlagenzuständen ist in der Regel nicht möglich und aus Gründen der Übersichtlichkeit auch nicht erwünscht. Wie in der DE-PS 28 36 500 angegeben, kann man die Informationen, die für die Darstellung des gesamten Bildes, des sogenannten Großbildes, erforderlich sind, in einem Bildspeicher hinterlegen und aus diesem nur einen Teil auslesen, so daß ein Ausschnitt aus dem Großbild dargestellt wird. Dieser Ausschnitt kann mit einem Bedienelement über das Großbild verschoben werden; man bezeichnet diesen Vorgang als "Bildrollen". Als Bedienelement wird hierfür im DE-A 3 204 428 ein Steuerknüppel eingesetzt, und zwar so, daß sich die Verschiebegeschwindigkeit progressiv mit der Auslenkung des Steuerknüppels ändert.

Ein Bedienelement, das in der Regel zum Verschieben eines Cursors auf dem Bildschirm benutzt wird, ist die sogenannte Rollkugel, die in einer feststehenden Platte oder einem Pult drehbar gelagert ist und die in Abhängigkeit von ihrer Drehrichtung positive oder negative $\Delta x$- und $\Delta y$-Impulse (Wegimpulse) abgibt. Durch Summieren der Wegimpulse werden Koordinaten erzeugt, an denen der Cursor dargestellt wird.

Ein anderes bekanntes Bedienelement ist die sogenannte Maus, die sich von der Rollkugel im Prinzip nur dadurch unterscheidet, daß die Kugel nicht in einer feststehenden Platte oder einem Pult angebracht ist, sondern an der Unterseite eines kleinen Gehäuses ("Maus"). Durch Bewegen des Gehäuses über eine Bedienplatte mit einer Oberfläche geeigneter Rauhigkeit wird die Kugel gedreht, so daß der Cursor entsprechend der Bewegung der Maus auf der Bedienplatte über den Bildschirm verschoben wird. Als Bedienelement für das Bildrollen hat jedoch die Maus den Nachteil, daß sie, wenn sie bis zum Ende der Bedienplatte geführt ist, umgesetzt werden muß, wodurch der Rollvorgang störend unterbrochen wird. Solche Unterbrechungen beim Verschieben von Zeichen treten prinzipiell bei allen Wegimpulse abgebenden Bedienelementen auf, also auch bei der Rollkugel. Gemäß einer solchen aus FR-A 2 549 991 bekannten Anordnung ändert sich die Verschiebegeschwindigkeit progressiv mit der Geschwindigkeit der Mausbewegung.

Der vorliegenden Erfindung liegt die Aufgabe zugrunde, eine Anordnung zu schaffen, mit der bei Verwendung von Wegimpulse abgebenden Bedienelementen ein kontinuierliches Bildrollen möglich ist.

Diese Aufgabe wird erfindungsgemäß mit den im Anspruch 1 angegebenen Maßnahmen gelöst.

Es werden also aus den Wegimpulsen nicht unmittelbar Positionssignale, sondern zunächst Geschwindigkeitssignale gebildet, aus denen dann die Positionssignale abgeleitet werden. Das Bildrollen wird dadurch gestartet, daß das Bedienelement gedreht oder verschoben wird, z. B., daß eine Maus von einem Ausgangspunkt aus über eine Bedienplatte bewegt wird, worauf sich die zu verschiebenden Zeichen über den Bildschirm bewegen, und zwar mit einer Geschwindigkeit, die der Strecke der Verschiebung des Bedienelementes entspricht. Wird dann die Maus angehalten, wird das Bildrollen mit unveränderter Geschwindigkeit und Richtung fortgesetzt.

Durch Zurückbringen des Bedienelementes an den Ausgangspunkt wird das Bildrollen gestoppt. Ein Ausschnitt aus einem Großbild beliebiger Größe kann daher kontinuierlich über dieses verschoben werden.

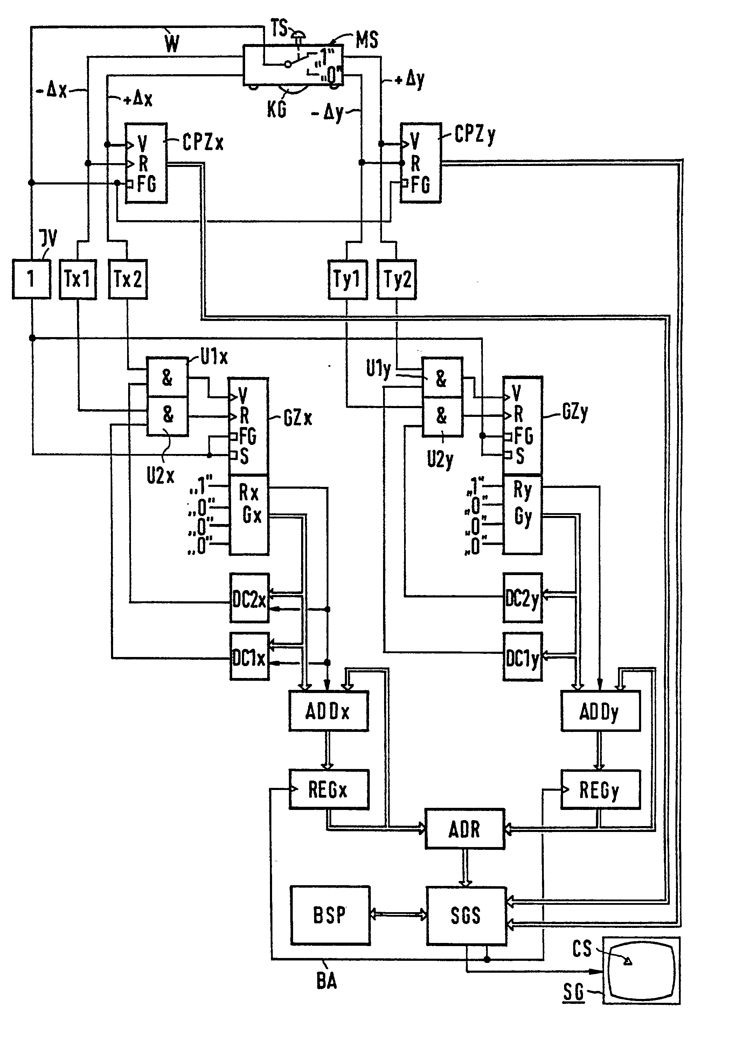

Anhand der Zeichnung, in der das Prinzipschaltbild eines Ausführungsbeispiels gezeigt ist, werden im folgenden die Erfindung sowie weitere Ausgestaltungen und Ergänzungen näher beschrieben und erläutert.

Mit MS ist eine Maus bezeichnet, mit der wahlweise ein Cursor CS auf dem Bildschirm eines Sichtgerätes SG positioniert oder ein Ausschnitt aus einem Großbild, das in einem Bildspeicher BSP enthalten ist, über den Bildschirm gerollt werden kann. Die beiden Betriebsarten können mittels einer Taste TS eingeschaltet werden, indem entweder log. "1"- oder log. "0"-Signal auf eine Leitung W gegeben wird. An ihrer Unterseite weist die Maus eine Kugel KG auf, die, wenn die Maus auf einer Unterlage mit geeigneter Rauhigkeit bewegt wird, sich entsprechend der Bewegungsrichtung dreht. Sie enthält für die beiden Koordinatenrichtungen eines rechtwinkligen Koordinatensystems je einen Impulsgeber, die jeweils dann einen Wegimpuls abgeben, wenn die Maus eine bestimmte Wegstrecke in der jeweiligen Koordinatenrichtung zurückgelegt hat. Je nach Bewegungsrichtung werden die Wegimpulse an verschiedenen Ausgängen abgegeben. Die Wegimpulse für Bewegungen in X-Richtung werden demgemäß auf zwei Leitungen $+\Delta x$, $-\Delta x$ und die Wegimpulse für Bewegungen in Y-Richtungen auf zwei Leitungen $+\Delta y$, $-\Delta y$ gegeben. An die Leitungen $+\Delta x$, $+\Delta y$ sind die Eingänge V für Vorwärtszählung von zwei Cursor-Positionszählern CPZx, CPZy angeschlossen, an die Leitungen $-\Delta x$, $-\Delta y$ die Eingänge R für Rückwärtszählung. In der eingezeichneten Schaltstellung des Tasters TS wird den Freigabeeingängen FG der Zähler CPZx, CPZy "1"-Signal zugeführt, so daß die Zählerstände bei Bewegen der Maus MS auf der Unterlage entsprechend der Bewegung verändert werden, und die Bildschirmkoordinaten des Cursors CS bilden. Sie werden einer Sichtgerätesteuerung SGS zugeführt, wo sie in bekannter Weise zur Darstellung des Cursors auf dem Bildschirm verarbeitet werden.

An die Leitungen $-\Delta x$, $+\Delta x$, $-\Delta y$, $+\Delta y$ sind Teiler Tx1, Tx2, Ty1, Ty2 angeschlossen, welche die Anzahl der Wegimpulse untersetzen. Mit ihren Ausgängen sind die einen Eingänge von UND-Gliedern U1x, U2x, U1y, U2y verbunden, deren zweite Eingänge an Decodierer DC1x, DC2x, DC1y, DC2y angeschlossen sind. Die Impulse von den UND-Gliedern U1x, U1y werden den Eingängen V für Vorwärtszählung von Rollgeschwindigkeitszählern GZx, GZy zugeführt, die Ausgangsimpulse der UND-Glieder U2x, U2y den Eingängen R für Rückwärtszählung dieser Zähler. Deren Freigabeeingänge FG sind an einen Inverter IV angeschlossen, so daß sie dann freigegeben sind, wenn mit dem Taster TS der Maus MS "0"-Signal auf die Leitung W gegeben wird. In diesem Falle sind die Positionszähler CPZx, CPZy gesperrt. Ihre Inhalte bleiben jedoch gespeichert, so daß der Cursor seine Position auf dem Bildschirm beibehält. Die Rollgeschwindigkeitszähler und die Cursor-Positionszähler brauchen nicht gesonderte Zähler sein; sie können auch von je einem Zähler für jede Koordinatenrichtung gebildet werden.

Mit der Maus können auch ein X- und ein Y-Zähler verbunden sein, welche die Wegimpulse aufsummieren und zyklisch abgefragt und zurückgesetzt werden. Aus den Abfragewerten werden Telegramme gebildet, welche die Weite und Richtung der Mausverschiebung mit der letzten Abfrage enthalten. Anstelle der Zähler CPZ und GZ werden in diesem Falle Addierer eingesetzt.

Die Rollgeschwindigkeitszähler GZx, GZy werden mit der Signalkombination "1000" voreingestellt, wenn an Setzeingängen S "0"-Signal zugeführt ist. Die höchstwertigen Stellen der Zählerstände geben die Rollrichtung an, die anderen Stellen die Rollgeschwindigkeit. Diese Stellen werden über Ausgänge Gx, Gy den einen Eingängen von Addierern ADDx, ADDy zugeführt. Die Richtungsbits werden über Ausgänge Rx, Ry an die Addierer ADDx, ADDy gegeben; sie steuern die Addierer derart, daß diese die an den Ausgängen Gx, Gy auftretenden Zahlen zu den Inhalten von Registern REGx, REGy addieren oder davon subtrahieren, je nachdem, ob das Richtungsbit log. "1" oder log. "0" ist. Das Additions- bzw. Subtraktionsergebnis wird mit dem Bildrücklauf des Sichtgerätes in die Register REGx, REGy übernommen. Hierzu sind den Registern REGx, REGy über eine Leitung BA von der Sichtgerätesteuerung SGS die Bildaustastimpulse zugeführt. Die Inhalte dieser Register können z. B. angeben, welche Koordinaten des Großbildes die linke obere Ecke des jeweils dargestellten Bildausschnittes hat. Diese Koordinaten werden einem Adressenrechner ADR zugeführt, der daraus die Adressen der Bildspeicherzellen errechnet, in denen die zur Darstellung des Ausschnittes erforderlichen Informationen enthalten sind. Die errechneten Adressen werden der Sichtgerätesteuerung SGS zugeführt, welche die Bildspeicherzellen aufruft, deren Inhalte in Videosignale umsetzt und das Sichtgerät SG ansteuert.

Im folgenden wird die Funktion des Ausführungsbeispiels näher erläutert. Ist die Taste TS in der gezeichneten Stellung, haben die Zähler GZx, GZy die Inhalte "1000". Die Inhalte der Register REGx, REGy und damit der Bildausschnitt bleiben konstant. Es wird zunächst angenommen, daß von den Decodierern DC1x, DC2x, DC1y, DC2y die UND-Glieder U1x, U2x, U1y, U2y freigegeben sind. Wird die Taste TS betätigt, ändert sich am Bildschirm zunächst nichts. Wird aber die Maus MS mit konstanter Geschwindigkeit in positiver X-Richtung geführt, dann erscheinen auf der Leitung + x Wegimpulse, und der Stand des Zählers GZx wird erhöht. Die drei niederwertigen Stellen des Zählerstandes werden zum Inhalt des Registers REGx addiert. Das bis zum nächsten Bildaustastimpuls erreichte Additionsergebnis wird als neuer Wert in das Register REGx eingetragen und für eine Bildperiode dem Adressenrechner ADR zugeführt. Dieser bildet nun während dieser Bildperiode die Adressen für einen Bildausschnitt, der gegenüber dem in der vorherigen Bildperiode dargestellten in X-Richtung verschoben ist. Da die Maus während der folgenden Bildperioden ständig in positiver X-Richtung weitergeführt wird, erhöht sich stets der Stand des Zähler GZx, und es wird daher dem Addierer ADDx vom Zähler GZx eine stets zunehmende Zahl zugeführt. Das Bildrollen beschleunigt sich daher. Wird die Maus angehalten, bleibt der Stand des Zähler GZx konstant und damit auch die Rollgeschwindigkeit. Erreicht der Stand des Zählers GZx einen im Decoder DC1x eingestellten Wert, sperrt dieser das UND-Glied U1x, und dem Eingang V des Zählers GZx werden keine weiteren Impulse mehr zugeführt; die Rollgeschwindigkeit ist auf einen maximalen Wert begrenzt. Wird die Maus zurück, d. h. in negativer X-Richtung geführt, gibt sie Wegimpulse auf die Leitung -x, so daß der Zähler GZx rückwärtsgezählt wird und die Rollgeschwindigkeit verlangsamt wird. Sie wird Null, wenn die Maus den Ausgangspunkt erreicht. Wird die Maus über den Ausgangspunkt hinaus in negativer X-Richtung bewegt, kehrt sich die Rollrichtung um und wird wieder um so größer, je mehr die Maus vom Ausgangspunkt entfernt wird. Bei einer maximalen Geschwindigkeit, die im Decoder DC2x eingestellt ist, wird das UND-Glied U2x gesperrt. Das Bildrollen kann auch dadurch gestoppt werden, daß die Taste TS losgelassen wird, wodurch die Zähler GZx, GZy gesperrt und mit dem Wert "1000" voreingestellt werden. Ein Zurückführen der Maus in den Ausgangspunkt ist dann nicht erforderlich. Ein Bildrollen in Y-Richtung und in jeder anderen Richtung erfolgt entsprechend, indem die Maus auf die Y-Achse bzw. an eine beliebige Stelle auf der Bedienplatte geführt wird.

## Patentansprüche

1. Anordnung zum Verschieben von Zeichen auf dem Bildschirm eines Sichtgerätes mit einem Bildspeicher, in dem ein Großbild gespeichert ist, von dem auf dem Bildschirm jeweils nur ein Ausschnitt darstellbar ist, und mit einem an sich bekannten Bedienelement ohne festen Bezugspunkt, das seiner Bewegung entsprechende Wegimpulse abgibt und mittels dessen der dargestellte Ausschnitt verschoben werden kann, indem Adressen zum Auslesen von Bildspeicherzellen gebildet werden, in denen die den jeweiligen Bildausschnitt angebenden Daten enthalten sind, welche Anordnung eine Einrichtung aufweist die, durch Summieren der Wegimpulse Verschiebegeschwindigkeitssignale und aus diesen Positionssignale bildet, welche den jeweils dargestellten Großbildausschnitt angeben.

2. Anordnung nach Anspruch 1, **dadurch gekennzeichnet**, daß die Wegimpulse mindestens einem Rollgeschwindigkeitszähler (GZx, GZy) zugeführt sind, dessen Stand als Rollgeschwindigkeitssignal zum Inhalt eines Registers (REGx, REGy) addiert wird und daß das jeweilige Additionsergebnis zyklisch in das Register (REGx, REGy) eingetragen, an das ein Adressenrechner (ADR) angeschlossen ist, dem der Bildspeicher (BSP) nachgeschaltet ist.

3. Anordnung nach Anspruch 2, **dadurch gekennzeichnet,** daß der jeweilige Stand des Rollgeschwindigkeitszählers (GZx, GZy) dem ersten Eingang eines Addierers (ADDx, ADDy) zugeführt ist, an den das Register (REGx, REGy) angeschlossen ist, dessen Ausgang mit dem zweiten Eingang des Addierers (ADDx, ADDy) und dem Adressenrechner (ADR) verbunden ist, und daß jeweils während der Bildaustastung des Sichtgerätes (SG) das Additionsergebnis in das Register (REGx, REGy) übernommen wird.

4. Anordnung nach Anspruch 2 oder 3, dadurch gekennzeichnet, daß der Rollgeschwindigkeitszähler (GZx, GZy) so ausgebildet ist, daß sein Stand auf Extremwerte begrenzt ist.

5. Anordnung nach Anspruch 4, dadurch gekennzeichnet, daß dem Zähleingang (V, R) des Rollgeschwindigkeitszählers (GZx, GZy) Torschaltungen (U1x, U2x; U1y, U2y) vorgeschaltet sind, die bei Erreichen von Extremwerten gesperrt werden.

6. Anordnung nach einem der Ansprüche 1 bis 5, dadurch gekennzeichnet, daß die höchstwertige Stelle des Standes des Rollgeschwindigkeitszählers (GZx, GZy) über einen ersten Ausgang (Rx, Ry) als Steuerbit dem Addierer (ADDx, ADDy) zugeführt ist und daß die niederwertigeren Stellen über weitere Ausgänge (Gx, Gy) dem Addierer (ADDx, ADDy) zugeführt sind, der je nach dem, ob das Steuerbit log. "1" oder "0" ist, die in den niederwertigeren Stellen enthaltene Zahl zum Inhalt des Registers (REGx, REGy) addiert oder von diesem subtrahiert.

7. Anordnung nach einem der Ansprüche 1 bis 7, dadurch gekennzeichnet, daß eine an sich bekannte Cursor-Positionszähleranordnung (CPZx, CPZy) vorhanden ist, und daß wahlweise die Cursor-Positionszähleranordnung (CPZx, CPZy) oder der Rollgeschwindigkeitszähler (GZx, GZy) zum Zählen der Wegimpulse freigegeben ist.

8. Anordnung nach einem der Ansprüche 1 bis 7, dadurch gekennzeichnet, daß die Bedieneinheit eine sogenannte Maus (MS) ist.

9. Anordnung nach einem der Ansprüche 1 bis 8, dadurch gekennzeichnet, daß zwischen die Bedieneinheit (MS) und den Rollgeschwindigkeitszähler (GZx, GZy) ein Teiler (Tx1, Tx2, Ty1, Ty2) geschaltet ist, welcher die Anzahl der Wegimpulse untersetzt.

10. Anordnung nach einem der Ansprüche 1 bis 9, **dadurch gekennzeichnet,** daß bei einem Bedienelement, das in zwei Freiheitsgraden beweglich ist und je Freiheitsgrad gesonderte Wegimpulse abgibt, zwei Rollgeschwindigkeitszähler (GZx, GZy), zwei Addierer (ADDx, ADDy) und zwei Register (REGx, REGy) vorhanden sind.

**Revendications**

1. Agencement pour déplacer des signes sur l'écran d'un appareil de visualisation, comportant une mémoire d'images dans laquelle est mémorisée une image panoramique (grande image) dont on peut ne représenter qu'une section sur l'écran, ainsi qu'un élément de commande, connu en soi, sans point de référence fixe et émettant des impulsions de parcours qui correspondent à son mouvement, et à l'aide duquel la section représentée peut être déplacée, avec formation d'adresses pour la lecture de cellules de la mémoire d'images, dans lesquelles sont contenues les données qui indiquent la section d'image concernée, ledit agencement comportant un dispositif qui, par sommation des impulsions de parcours, forme des signaux de vitesse de déplacement et, à partir de ceux-ci, des, signaux de position qui indiquent la section de la vue panoramique qui est représentée.

2. Agencement selon la revendication 1, caractérisé par le fait que les impulsions de parcours sont appliqués à au moins un compteur de vitesse du défilement (G7x, G7y) dont l'état de comptage est additionné, en tant que signal de vitesse du défilement, au contenu d'un registre (REGx, REGy), et que le résultat de l'addition ainsi obtenu est introduit cycliquement dans le registre (REGx, REGy) auquel est relié un calculateur d'adresses (ADR) en aval duquel est relié la mémoire d'images (BSP).

3. Agencement selon la revendication 2, caractérisé par le fait que l'état du compteur de la vitesse de défilement (GZx, GZy), est appliqué à la première entrée d'un additionneur (ADDx, ADDy) auquel est relié le registre (REGx, REGy), dont la sortie est reliée à la seconde entrée de l'additionneur (ADDx, ADDy) et au calculateur d'adresses (ADR), et que pendant le balayage de l'appareil de visualisation (SG), le résultat de l'addition est introduit dans le registre (REGx, REGy).

4. Agencement selon la revendication 2 ou 3, caractérisé par le fait que le compteur de vitesse de défilement (GZx, GZy) est réalisé de façon que son état est délimité par des valeurs limites.

5. Agencement selon la revendication 4, caractérisé par le fait qu'en amont de l'entrée de comptage (V, R) sont montés des circuits de portes (U1x, U2x; U1y, U2y) qui sont bloquées lorsque des valeurs extrêmes sont atteintes.

6. Agencement selon l'une des revendications 1 à 5, caractérisé par le fait que le chiffre de poids le plus élevé de l'état du compteur de la vitesse de défilement (GZx, GZy) est appliquée, par une première sortie (Rx, Ry) et en tant que bit de commande, à l'additionneur (ADDx, ADDy), et que les chiffres de poids moins élevé appliquent, par l'intermédiaire de sorties (Gx, Gy) et suivant que le bit de commande est un "1" ou un "0" logique, le nombre qui est contenu dans les chiffres de poids moins élevé, à l'additionneur (ADDx, ADDy) qui procède à une addition avec le contenu du registre (REGx, REGy), ou à une soustraction de ce contenu.

7. Agencement selon l'une des revendications 1 à 6, caractérisé par le fait qu'il est prévu un dispositif de comptage du curseur (CPZx, CPZy), connu en lui-même, et qu'au choix le dispositif de comptage du curseur (CPZx CPZy) ou le compteur de la vitesse de défilement (GZx, GZy) sont autorisés pour compter les impulsions de parcours.

8. Agencement selon l'une des revendications 1 à 7, caractérisé par le fait que l'unité de commande est une souris (MS).

9. Agencement selon l'une des revendications 1 à 8, caractérisé par le fait qu'entre l'unité de commande (MS) et le compteur de la vitesse de défilement (GZx, GZy) est monté un diviseur (Tx1, Tx2, Ty1, Ty2) qui démultiplie le nombre d'impulsions de parcours.

10. Agencement selon l'une des revendications 1 à 9, caractérisé par le fait que dans le cas d'un élément de commande qui est mobile à deux degrés de libertés et qui émet par degré de liberté des impulsions distinctes de parcours, il est prévu deux compteurs de vitesse de défilement (GZx, Gzy), deux additionneurs (ADDx, ADDy) et deux registres (REGx, REGy).

**Claims**

1. An arrangement for displacing characters on the display screen of a visual display unit with an image memory in which a rolling-map is stored, only one respective section of which is able to be displayed on the display screen, and with an operator's control, known in itself, without a fixed reference point, which emits displacement pulses corresponding to its movement, by means of which the displayed section can be displaced, in that addresses are formed for reading out from image-memory locations in which the data indicating the respective image section are contained, which arrangement has a device, which by summing the displacement pulses forms displacement speed signals and from these position signals, which indicate the respective displayed rolling-map section.

2. An arrangement according to claim 1, characterised in that the displacement pulses are supplied at least to a rolling speed counter (GZx, GZy), the state of which as rolling speed signal is added to the contents of a register (REGx, REGy) and in that the respective adding result is recorded cyclically in the register (REGx, REGy), to which an address computer (ADR) is connected, to which is subsequently connected the image memory (BSP).

3. An arrangement according to claim 2, characterised in that the respective state of the rolling speed counter (GZx, GZy) is supplied to the first input of an adder (ADDx, ADDy), to which the register (REGx, REGy) is connected, the output of which is connected to the second input of the adder (ADDx, ADDy) and to the address computer (ADR) and in that in each case during the picture blanking of the visual display unit (SG) the addition result is transferred into the register (REGx, REGy).

4. An arrangement according to claim 2 or 3, characterised in that the rolling speed counter (GZx, GZy) is formed such that its state is bounded by extreme values.

5. An arrangement according to claim 4, characterised in that gate circuits (U1x, U2x; U1y, U2y) are connected ahead of the counting input (V, R) of the rolling speed counter (GZx, GZy), which are inhibited when extreme values are reached.

6. An arrangement according to one of claims 1 to 5, characterised in that the most significant digit of the state of the rolling speed counter (GZx, GZy) is supplied as a control bit to the adder (ADDx, ADDy) by way of a first output (Rx, Ry), and in that the lower-order digits are supplied to the adder (ADDx, ADDY) via outputs (Gx, Gy), said adder adding the number contained in the lower-order digits to the content of the register (REGx, REGy) or subtracting that number from this content depending on whether the control bit is logic "1" or "0".

7. An arrangement according to one of claims 1 to 7, characterised in that a cursor-positioning counter arrangement (CPZx, CPZy), known in itself, is present, and in that the cursor-positioning counter (CPZx, CPZy) or the rolling speed counter (GZx, GZy) is selectively enabled for counting the displacement pulses.

8. An arrangement according to one of claims 1 to 7, characterised in that the operator's control is a so-called mouse (MS).

9. An arrangement according to one of claims 1 to 8, characterised in that between the operator's control (MS) and the rolling speed counter (GZx, Gzy) there is connected a divider (Tx1, Tx2, Ty1, Ty2) which reduces the number of displacement pulses.

10. An arrangement according to one of claims 1 to 9, characterised in that with an operator's control, that is mobile in two degrees of freedom and that, for each degree of freedom emits separate displacement pulses, two rolling speed counters (GZx, GZy), two adders (ADDx, ADDy) and two registers (REGx, REGy) are present.